# EUROPEAN PATENT APPLICATION

(11) **EP 3 979 239 A1**
(43) Date of publication of application: **06.04.2022**
(21) Application number: 20200164.0
(22) Date of filing: 05.10.2020
(51) Int. Cl.: G10L 15/26, G06F 40/20

(54) **METHOD AND APPARATUS FOR AUTOMATIC ASSESSMENT OF SPEECH AND LANGUAGE SKILLS**

(71) Applicant: Kids Speech Labs, D16NW54 Dublin (IE)
(72) Inventor: D'Arcy, Shona, D16NW54 Dublin (IE); Harrison, Lindsay, D16NW54 Dublin (IE)
(74) Representative: Tomkins & Co

(57) **Abstract**

A method of automatically assessing speech of a user, comprising eliciting a response from the user based on the presentation of a stimulus to a user, the stimulus comprising an image and an associated instruction and the response comprising a speech segment; processing the speech segment using a speech recognition engine and a natural language processing engine to identify a characteristic of the speech segment; and scoring the elicited response based on the identified characteristic.

## Description

### Field of the Invention

The present invention relates to a method and system for the automatic assessment of speech and language skills..

### Background to the Invention

Speech and language skills refer to a range of skills that are assessed when determining if speech skills, in particular those of children, are progressing in line with expected targets for children of comparable ages. Speech and language skills are roughly grouped into four categories, namely:
(i) Articulation, i.e. the ability to correctly achieve specific speech sounds
(ii) Phonology, i.e. being able to achieve the sound and being able to place it in the correct place in a word.
(iii) Expressive language, i.e. being able to compose language correctly to communicate. Examples of delays are not forming full sentences, for example, "dog ball" instead of "the dog has the ball", vocabulary size, or mixing up tense.
(iv) Receptive language, understanding instructions. Examples of errors are answering a different question, not understanding concept, big V little, forward V backward
As an example of potential errors and issues, with articulation, an example error would be a lisp, for example. Phonological errors include for example substituting similar sounds for example "kate" for "gate", "gar" for "kar". Expressive language errors include for example, an inability to form full sentences for example, ", "dog ball" instead of "the dog has the ball" or vocabulary size or mixing up tenses. When considering errors with receptive language, such errors would include answering a different question, a misunderstanding of the concept or confusing size (big versus little) or direction (forward versus backwards). It will be appreciated that these errors are exemplary only rather than exhaustive.

Speech, and in particular that of children develops over time and there are associated age ranges within which the child is expected to master a particular skill. Considering the age of the child and the absence of mastery of a particular skill, the child may be considered to have a speech/language delay.

There is a desire to provide an automatic assessment mechanism and system allowing non-experts to understand if a person's skills are in line with clinical normative data. The present application facilitates remote and objective technical assessment of speech skills.

### Summary of the Invention

It should be appreciated that all combinations of the foregoing concepts and additional concepts discussed in greater detail below (provided such concepts are not mutually inconsistent) are contemplated as being part of the inventive subject matter disclosed herein. In particular, all combinations of claimed subject matter appearing at the end of this disclosure are contemplated as being part of the inventive subject matter disclosed herein. It should also be appreciated that terminology explicitly employed herein that also may appear in any disclosure incorporated by reference should be accorded a meaning consistent with the particular concepts disclosed herein.

There is provided herein a method of automatically assessing speech of a user, comprising eliciting a response from the user based on the presentation of a stimulus to a user, the stimulus comprising an image and an associated instruction and the response comprising a speech segment; processing the speech segment using a speech recognition engine and a natural language processing engine to identify a characteristic of the speech segment; and scoring the elicited response based on the identified characteristic.

This automated method and system provides increased efficiency and accuracy in the automatic assessment of speech and language skills. The methods apparatus and systems described herein serve to remove subjectivity in assessment by providing a standard and trainable system. An expanded set of data models as described herein is easily scaleable to provide a large set of data points. Further the use of predefined prompts or stimuli are customised to the delivery mechanisms thus improving the efficiencies of the system. These customised stimuli enable personalised to be generated while still providing benchmarked assessments. By combining multiple machine learning techniques higher accuracy and efficiency is achieved.

Scoring the elicited response may comprise comparing the elicited response with an expected response to the stimulus.

These comparisons allow for accuracies and relative grading of the user in comparison with other users of the similar age.

Processing the speech segment using a speech recognition engine may comprise extracting a target word from the speech segment; processing the target word to determine a set of phonetic components for each target word; comparing each phonetic component of the set of phonetic components with a machine learning data model for the predefined image; and characterising each component based on the comparison.

Characterising each component may comprise characterising each component as correct, omitted or substituted.

Characterising each component may further comprise comparing each phonetic component with machine learning data models for a set of predefined similar target words, the predefined similar target words having a number of features in common with the target.

Processing the speech segment using the natural language processing engine to identify the characteristic may comprise:
assessing the speech segment to determine a plurality of speech-related skills, said speech related skills extracted from the list of characteristics, including
determining whether a user identified an action associated with the instruction;
determining a coherence of a description of the image; determining whether the user response was grammatically correct;
determining whether the response demonstrated an understanding of the instruction;
determining whether the user identified one or more action words associated with the stimulus; or
determining whether the user identified a correct preposition.

The method may further comprise differentiating between speech components and non-speech components of the speech segment to identify a supplemental feature and wherein scoring the elicited response is further based on the supplemental feature.

The supplemental features may comprise a duration of utterance, a number of pauses or a number of speech segments

The supplemental features may comprise an acoustic feature selected from the list including spectral features, voice quality features, prosodic features, duration of speech segment, number of speech segments or voice onset timing.

The method may further comprise eliciting a second response from the user based on a predefined audible instruction, the second response comprising a selection of an image from a predefined set of images displayed on the screen in response to the audible instruction, and metadata associated with the selection of the image.

Assessing speech of the user may be further based on the second response. The screen may comprise a touch screen.

The method of the present embodiment may further comprise generating a report outlining the scoring of the user in response to the stimulus.

There is further described an apparatus for automatically assessing speech of a user, comprising means for eliciting a response from the user based on the presentation of a stimulus to a user, the stimulus comprising an image and an associated instruction and the response comprising a speech segment; means for processing the speech segment using a speech recognition engine and a natural language processing engine to identify a characteristic of the speech segment; and means for scoring the elicited response based on the identified characteristic

Means for scoring the elicited response may comprise means for comparing the elicited response with an expected response to the stimulus.

Means for processing the speech segment using a speech recognition engine may comprise means for extracting a target word from the speech segment; means for processing the target word to determine a set of phonetic components for each target word; means for comparing each phonetic component of the set of phonetic components with a machine learning data model for the predefined image; and characterising each component based on the comparison.

Means for characterising each component may comprise means for characterising each component as correct, omitted or substituted.

Means for characterising each component may further comprise comparing each phonetic component with machine learning data models for a set of predefined similar target words, the predefined similar target words having a number of features in common with the target

Means for processing the speech segment using the natural language processing engine to identify the characteristic may comprise:
means for assessing the speech segment to determine a plurality of speech-related skills, said speech related skills extracted from the list of characteristics, including means for determining whether a user identified an action associated with the instruction; means for determining a coherence of a description of the image; determining whether the user response was grammatically correct; means for determining whether the response demonstrated an understanding of the instruction; means for determining whether the user identified one or more action words associated with the stimulus; or means for determining whether the user identified a correct preposition.

The apparatus may further comprise means for differentiating between speech components and non-speech components of the speech segment to identify a supplemental feature and wherein scoring the elicited response is further based on the supplemental feature.

The apparatus may further comprise means for eliciting a second response from the user based on a predefined audible instruction, the second response comprising a selection of an image from a predefined set of images displayed on the screen in response to the audible instruction, and metadata associated with the selection of the image.

The screen may comprise a touch screen.

The apparatus may further comprise means for generating a report outlining the scoring of the user in response to the stimulus.

As described above the means for eliciting a response from the user based on the presentation of a stimulus to a user, the stimulus comprising an image and an associated instruction and the response comprising a speech segment; means for processing the speech segment using a speech recognition engine and a natural language processing engine to identify a characteristic of the speech segment; and means for scoring the elicited response based on the identified characteristic may comprise a processing module.

The apparatus may further comprise a memory module.

The apparatus may further comprise a graphical user interface.

The apparatus may further comprise a touch screen interface.

The apparatus may further comprise an audio interface.

The apparatus may further comprise a microphone.

The audio interface may comprise a speaker.

There is also provided a computer program comprising program instructions for causing a computer program to carry out the above method which may be embodied on a record medium, carrier signal or read-only memory.

### Brief Description of the Drawings

Embodiments of the invention will be described, by way of example only, with reference to the accompanying drawings in which:

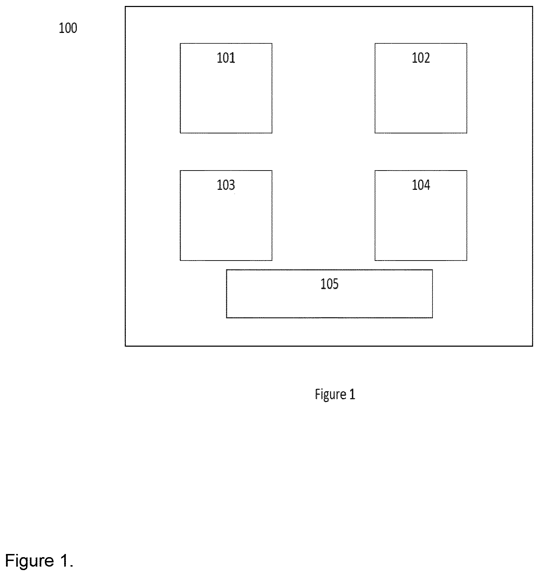

**Figure 1** is a sample graphical user interface displaying a sample stimulus to elicit a response in accordance with an embodiment of the present invention;

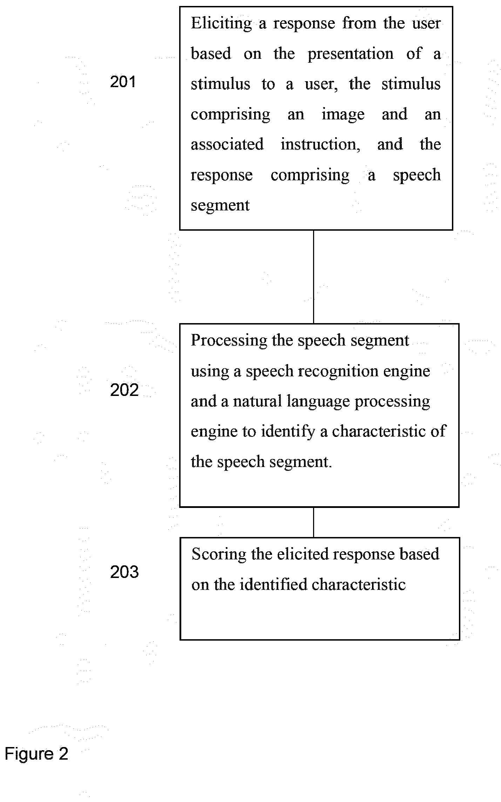

**Figure 2** is a method of automatically assessing speech of a user in accordance with an embodiment of the present invention.
**Figure 3** is an overview of a method of automatically assessing speech of a user in accordance with an embodiment of the present invention
**Figure 4** is a flow of training machine learning algorithms for assessment protocols in accordance with an embodiment of the present invention.
**Figure 5** is an overview of an assessment procedure in accordance with an embodiment of the present invention.

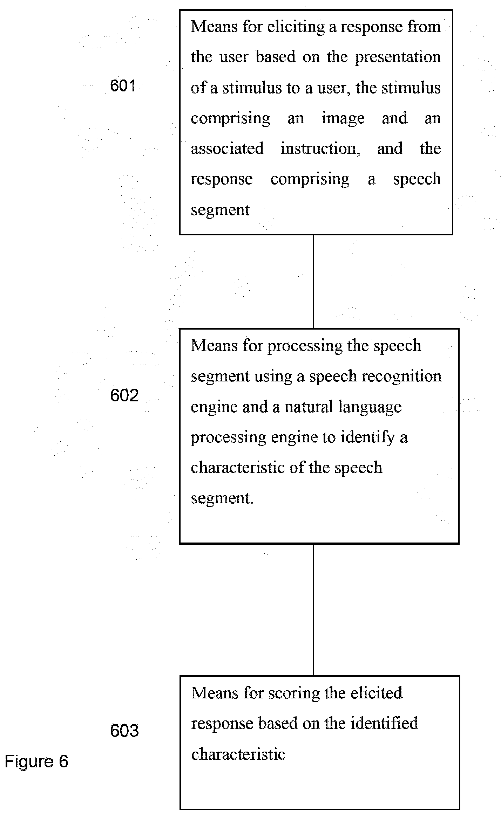

**Figure 6** provides an overview of an apparatus for implementing the methods of the present invention.

### Detailed Description of the Drawings

To assess speech of a user, it is desired to elicit a response from the user, 201. The user may be a child. It is desired to elicit a predetermined response to facilitate a comparative analysis of the response of the user. Predetermined responses allow for expected norms and comparisons with these expected norms. The stimulus provided may include an image and an associated instruction. By providing an image and associated instruction, articulation, phonology, expressive language and receptive language skills can be assessed.

Consider for example an image of a wet dog standing beside a swimming pool. The associated instruction may include a question asking "Why is the dog wet". The expected response would be, "because he jumped into the pool".

Another example may include providing a plurality of images of different size bottles and asking a child to choose the largest bottle of water from stimuli including several sizes of bottles. The choice can be verbal or on a touch screen.

A further example may also include an image of a child falling over. The expected response would include target words such as "falling "or "tripping". Expanding on this to determine a range of skills the expected response required may be "she is falling".

The stimulus may be provided as any combination of audio and image based instructions. The audio stimulus may be provided using a speaker or through headphones or other audio delivery mechanism. The image based instructions may be provided on a graphical user interface displayed on a screen. In one configuration, which is shown as an example only, four separate images 101, 102, 103, 104 are displayed on a screen 100. In addition a written command 105 may be displayed at the bottom of the picture. This command may be desired to elicit a verbal response or a touch response or a combination of both from the user. For example if the screen is a touch screen, the user may be required to touch a picture and verbalise what they see, for example "a small dog".

Language is usually divided into expressive (ability to express needs/feeling/describe actions and event, structuring language and using grammar correctly ability to understand language spoken to them) and receptive skills (the ability to understand words and language). To provide an assessment of speech skills it is necessary to consider both the expressive and receptive skills.

The response, both speech and non-speech is elicited to specifically target clinical speech and language skills. The response (speech and/or non-speech) to specific stimuli is processed to determine whether a user, for example a child, has successfully mastered speech skills. The elicited samples are processed, 202 using automated algorithms as described here in and in further details below. Through processing using these automated algorithms or data models 303, for example a speech recognition engine and a natural language processing engine, characteristics of the speech segment, and where applicable the non-speech segment are identified.

These characteristics of the language skill include, as examples only:
(i) Did the user identify the action?
(ii) How coherent was the user's description?
(iii) Did the user use the correct tense?
(iv) Does the user understand concepts: size/quality/spatial
(v) Did the user identify the relevant action word (dog **barking,** or the girl is **sliding** down),
(vi) Did the user identify the current preposition **(under** the table).

It will be appreciated that these are sample characteristics only and additional characteristics may be envisaged in accordance with the present invention.

It will be appreciated that a single characteristic may be used or a combination of one or more characteristics used in the assessment of language skills. In one configuration, the assessment of "achieving a specific language skill" will be based on a combination of the above features. This may be the combination of skills which achieves the highest correlation with the assessment of clinical speech therapist.

The elicited response is then scored, 203, based on the characteristic or characteristics.

In one configuration, scoring is a confidence score achieved by comparing the characteristics with one or more thresholds. A confidence score of 100 for example, would indicate an exact match. A confidence score of 0 would indicate that no matches were found. For example a score of 100 would be labelled as correct and 0 would be labelled as omitted. These thresholds set based on similar verified characteristics for users having a similar profile (age, ability) to the user of the system. While 0 and 100 are provided as examples

Scoring is implemented using a machine learning algorithm. This machine learning algorithm is trained using a corpus of verified training data, 302. The corpus 302 is made up of responses elicited in response to the same combination of image and instruction and which have been verified as correct samples. New stimuli/prompt formats are processed in response to the training corpus.

For example, a first characteristic of an elicited response may be whether or not a target speech skill has been achieved. In one configuration, this can be determined by comparing a confidence score from test examples to a training model and identifying the presence of a target word in the response. It will be appreciated that a combination of scores based on a plurality of characteristics may be used to determine if any particular speech skill has been achieved. Scoring may be based on the target word only or based on the target word and an additional combination of identified skills. For example a plurality of words (cat/bat/mat) may be scored for comparative confidence scores. It will be appreciated that statistical models may be build using the confidence scores obtained based on the training data.

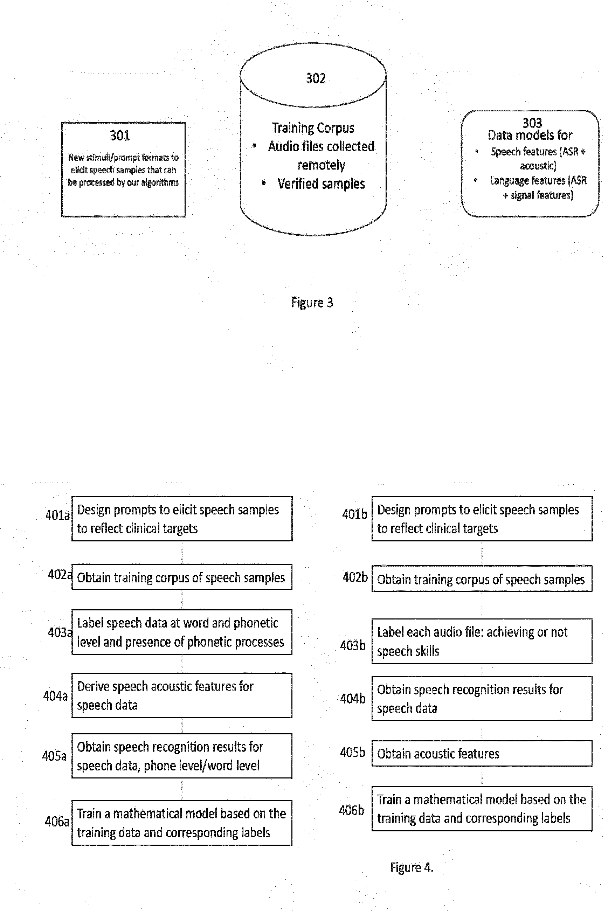

Mathematical models may be developed in accordance with Figure 4. Prompts are designed to elicit specific responses, 401a, 401b. A training corpus of speech samples is extracted 402a, 402b. These samples comprise speech and additional data components. Speech data is labelled at both a word level and a phonetic level. In addition the presence of phonetic processes may also be labelled, 403a.

The training corpus for the algorithms of the present application may be a corpus of audio files of examples of single words collected over time from a number of users of the system. Each of these single words is considered a target word. Each target word is broken down into a plurality of phoenetic components, i.e. Guitar /G IH T AA R/. It will be appreciated that this may be in accordance with the phonetic alphabet used in speech recognition (ARPAbet). Each phonetic component is labelled 403a. Example labels in a phonological assessment may include "Successful", or "Correct", "Omitted" and/or "Substituted".

Each audio file is also labelled to determine whether or not speech skills have been achieved, 403b. Speech recognition results for speech data, phone level/word level are also determined 405a using natural language processing techniques. Similarly acoustic features are determined 405b. The mathematical model (speech model) is trained based on the obtained speech recognition results and the corresponding labelled speech data, 406a. Similarly the language feature model is trained based on the training data and corresponding labels determined from the obtained acoustic features and the natural language processing.

It will be appreciated that the provision of a predetermined stimulus to a user means that a controlled set of results are expected. The speech recognition engine and the natural language processing engine are looking for particular target words and phraseology in the audio sample.

Consider for example, a first image displayed to a user of the system. The image may be of a child who has fallen and is crying. The associated instruction may be a question asking why is the child crying? The user, in this example, provides a response comprising a speech segment the response being "fell". The speech segment or sample is processed using the speech processing engine and the natural language processing engine to determine a plurality of speech skills or characteristics of the speech segment, for example, use of sentence structure, tense, verb, etc. In this case, the result of the processing would score the response identifying that there was no sentence, and just a single word, no preposition is used, but the tense is correct. The response is therefore scored but the score would indicate that the expected skill or response is not achieved. Accordingly, the score would be compared to an acquisition table to determine whether those characteristics are age appropriate. For example, if a user is aged three and has not achieved the full expected response, the score may be compared with an acquisition table to determine whether the score is age appropriate.

Due to the complex nature of speech, this process may be repeated a plurality of times to determine an average result. Multiple scores may be required to determine an accurate assessment. In an additional step, target words may be compared to similar words where there is a likelihood of confusion. This allows the score to be double checked. A confusion matrix may be provided for comparison of similar words which may be confused with the target sample.

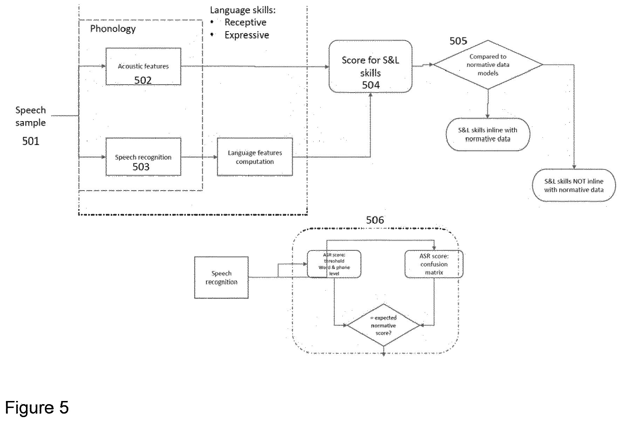

In response to the stimulus as outlined above, a speech segment or sample is obtained 501. The speech segment is then processed. Phonological assessment is based on an assessment of acoustic features 502 and also speech recognition 503. The analysis of the combination of acoustic and speech features provides characteristics of language skills, both receptive and expressive. Recognising the speech comprises recognising words or phrases included in the speech sample. Acoustic features include, but are not limited to spectral features (Mel Frequency cepstral coefficients, prosodic features (pitch, energy), voice quality features (jitter & shimmer) and temporal acoustic features, voice onset timing, duration of phonation, etc. The combination of speech recognition and acoustic feature recognition allows articulation errors, for example through limitations in motor or cognitive processes to be taken into account. It will be appreciated that the recognition of articulation disorders is a further advantage of the present invention. Articulation errors, for example include a lisp. The data models can be trained using such articulation errors to ensure a correct identification of such. It will be appreciated that speech recognition alone can be used, however, the results of the phonological assessment can be improved through the combination of speech recognition and acoustic features as shown in Figure 5. The output of the language skills component is scored, 504, as outlined above.

Speech recognition may be supplemented with a measure of fluency and or utterance duration to improve accuracy of scoring. These 2 measures may be calculated from signal processing techniques such frequency analysis to differentiate between speech and non-speech, including but not limited to: duration of utterance, number of pauses, number of speech segments. These features can indicate how easily speech and language is generated by the person. For example, one-word answers when asked to describe a scene, may indicate a language delay when combined with using the wrong tense in another task.

There are many factors that can improve the assessment of speech skills and/or diagnosis of speech and language disorders, including social skills, eating and drinking ability and timelines for achieving other developmental milestones. These developmental features can be captured through other monitoring technologies or digital diaries.

These scores are compared to normative data models, 505. As described above this is to determine whether or not speech and language skills are in line with normative data.

Speech recognition alone and the combination of words and phones can be equally used to determine 506 a score which again can be compared to expected norms. An example of such a norm would be for example i.e. if a child can't say /sh/ correctly but is 3.5yr, they are not expected to fully achieve this sound until 4.5yrs.

As outlined above, the speech recognition scores can also be supplemented with confusion scores based on comparisons with predefined similar words. Some sounds require analysis of additional acoustic features to achieve acceptable accuracies. Articulation errors occur from a failure to achieve the correct sound, through limitations in motor or cognitive processes. Sounds that are affected by articulation disorders will not be recognized by a traditional ASR as they will most likely not occur in the training data or the pronunciation dictionary. It will be appreciated that using the mechanisms proposed herein additional models may be trained to identify these articulation disorders.

It will be appreciated that if word A has similar ASR scores to a majority of words in the subset confusion exists.

If word A has significantly higher ASR scores to the majority of subset words no confusion exists.

It will be appreciated that it may also be possible to identify incorrect or substituted sounds to identify the phonological process that is happening.

The processes outlined above can be integrated into a gaming environment. Any electronic device with a graphical user interface can be used to display an image. This device may have associated audio output. However an audio output may be separately provided from a speaker, a mobile device or other audio output device. Similarly the electronic device may comprise a microphone or other audio collection mechanism. The microphone may also be provided through a separate device, distinct from the computing device, for example an audio recorder, or a mobile communication device. The graphical user interface may comprise a touch screen. The assessment of language skills may also incorporate touchscreen responses to stimuli designed to assess receptive skills. Additional notepad functionality may also be provided. This notepad functionality may be provided on the touch screen. Alternatively the notepad functionality may be digital paper or an additional touch screen or the like. One or more

The number of features may vary depending on the skill being assessed, data analysis will determine the optimum combination of features to achieve the highest accuracy when scoring whether a child has achieved a speech skill.

Using the mechanisms as outlined above artificial intelligence or machine learning models of developmental patterns across all speech and language skills can be developed.

The embodiments in the invention described with reference to the drawings comprise a computer apparatus and/or processes performed in a computer apparatus. However, the invention also extends to computer programs, particularly computer programs stored on or in a carrier adapted to bring the invention into practice. The program may be in the form of source code, object code, or a code intermediate source and object code, such as in partially compiled form or in any other form suitable for use in the implementation of the method according to the invention. The carrier may comprise a storage medium such as ROM, e.g. CD ROM, or magnetic recording medium, e.g. a floppy disk or hard disk. The carrier may be an electrical or optical signal which may be transmitted via an electrical or an optical cable or by radio or other means.

The invention is not limited to the embodiments hereinbefore described but may be varied in both construction and detail.

The above-described embodiments of the present technology can be implemented in any of numerous ways. For example, the embodiments may be implemented using hardware, software or a combination thereof. When implemented in software, the software code can be executed on any suitable processor or collection of processors, whether provided in a single computer or distributed among multiple computers. It should be appreciated that any component or collection of components that perform the functions described above can be genetically considered as one or more controllers that control the above-discussed functions. The one or more controllers can be implemented in numerous ways, such as with dedicated hardware, or with general purpose hardware (e.g., one or more processors) that is programmed using microcode or software to perform the functions recited above. In this respect, it should be appreciated that one implementation of the embodiments of the present technology comprises at least one computer-readable storage medium (e.g., a computer memory, a floppy disk, a compact disk, a tape, a flash drive, etc.) encoded with a computer program (i.e., a plurality of instructions), which, when executed on a processor, performs the above-discussed functions of the embodiments of the present technology. The computer-readable storage medium can be transportable such that the program stored thereon can be loaded onto any computer resource to implement the aspects of the present technology discussed herein. In addition, it should be appreciated that the reference to a computer program which, when executed, performs the above-discussed functions, is not limited to an application program running on a host computer. Rather, the term computer program is used herein in a generic sense to reference any type of computer code (e.g., software or microcode) that can be employed to program a processor to implement the above- discussed aspects of the technology.

The words "comprises/comprising" and the words "having/including" when used herein with reference to the present invention are used to specify the presence of stated features, integers, steps or components but do not preclude the presence or addition of one or more other features, integers, steps, components or groups thereof.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination.

## Claims

1. A method of automatically assessing speech of a user, comprising
eliciting a response from the user based on the presentation of a stimulus to a user, the stimulus comprising an image and an associated instruction and the response comprising a speech segment;
processing the speech segment using a speech recognition engine and a natural language processing engine to identify a characteristic of the speech segment; and
scoring the elicited response based on the identified characteristic

2. The method of claim 1 wherein scoring the elicited response comprises comparing the elicited response with an expected response to the stimulus.

3. The method of claim 1 wherein processing the speech segment using a speech recognition engine comprises
extracting a target word from the speech segment;
processing the target word to determine a set of phonetic components for each target word;
comparing each phonetic component of the set of phonetic components with a machine learning data model for the predefined image; and characterising each component based on the comparison.

4. The method of claim 3 wherein characterising each component comprises characterising each component as correct, omitted or substituted.

5. The method of claim 3 or 4 wherein characterising each component further comprises comparing each phonetic component with machine learning data models for a set of predefined similar target words, the predefined similar target words having a number of features in common with the target

6. The method of any previous claim wherein processing the speech segment using the natural language processing engine to identify the characteristic comprises:
assessing the speech segment to determine a plurality of speech-related skills, said speech related skills extracted from the list of characteristics, including
determining whether a user identified an action associated with the instruction;
determining a coherence of a description of the image; determining whether the user response was grammatically correct;
determining whether the response demonstrated an understanding of the instruction;
determining whether the user identified one or more action words associated with the stimulus; or
determining whether the user identified a correct preposition.

7. The method of any previous claim further comprising differentiating between speech components and non-speech components of the speech segment to identify a supplemental feature and wherein scoring the elicited response is further based on the supplemental feature.

8. The method of claim 7 wherein the supplemental features comprise a duration of utterance, a number of pauses or a number of speech segments

9. The method of claim 7 or 8 wherein the supplemental features comprises an acoustic feature selected from the list including spectral features, voice quality features, prosodic features, duration of speech segment, number of speech segments or voice onset timing.

10. The method of any previous claim further comprising eliciting a second response from the user based on a predefined audible instruction, the second response comprising a selection of an image from a predefined set of images displayed on the screen in response to the audible instruction, and metadata associated with the selection of the image.

11. The method of claim 10 wherein assessing speech of the user is further based on the second response.

12. The method of claim 10 or 11 wherein the screen comprises a touch screen.

13. The method of any previous claim further comprising generating a report outlining the scoring of the user in response to the stimulus.

14. An apparatus for automatically assessing speech of a user, comprising
means for eliciting a response from the user based on the presentation of a stimulus to a user, the stimulus comprising an image and an associated instruction and the response comprising a speech segment;
means for processing the speech segment using a speech recognition engine and a natural language processing engine to identify a characteristic of the speech segment; and
means for scoring the elicited response based on the identified characteristic

15. A computer readable programmable medium carrying a computer program stored thereon which when executed by a processing module implements the method according to any of claims 1 to 13.
